# EUROPEAN PATENT APPLICATION

(11) **EP 2 980 532 A1**
(43) Date of publication of application: **03.02.2016**
(21) Application number: 15172478.8
(22) Date of filing: 17.06.2015
(51) Int. Cl.: G01C 21/36

(54) **VEHICULAR INFORMATION PROVIDING APPARATUS**

(30) Priority: 31.07.2014 JP 2014156945
(71) Applicant: Toyota Jidosha Kabushiki Kaisha, Toyota-shi, Aichi 471-8571 (JP)
(72) Inventor: INOUE, Atsushi, Toyota-shi, Aichi 471-8571 (JP)
(74) Representative: TBK

(57) **Abstract**

A vehicular information providing apparatus stores a travel history of a vehicle; sets a home area of a user of the vehicle; analyses usage patterns of the vehicle based on the travel history and, based on the analysis, assigns a predetermined use scene of the vehicle to a usage state of the vehicle including a time factor including a time zone and a day of the week, a departure place, a destination and a travel route; and provides information to the user of the vehicle and changes the information to be provided according to whether the vehicle is present in the home area and the predetermined use scene assigned.

## Description

### BACKGROUND OF THE INVENTION

### 1. Field of the Invention

The present invention relates to a vehicular information providing apparatus.

### 2. Description of the Related Art

In the related art, an information delivery system is known (for example, see Japanese Laid-Open Patent Application No. 2011-022756 (Patent Reference No. 1)) where, according to whether a vehicle is present in a user's home area, information to be delivered to an onboard apparatus is changed. Thus, according to whether the vehicle is present in the user's home area, information provided to the user of the vehicle by the onboard apparatus is changed.

According to Patent Reference No. 1, when the onboard apparatus is present in the user's home area, seasonal information (such as bargain-sale information near an area where the vehicle is travelling, or so) is provided. On the other hand, when the onboard apparatus is present outside the home area, sightseeing information is provided.

### SUMMARY OF THE INVENTION

According to one aspect of the present invention, a vehicular information providing apparatus includes a travel history storage part that stores a travel history of a vehicle; a home area setting part that sets a home area of a user of the vehicle; a usage pattern analysis part that analyses usage patterns of the vehicle based on the travel history stored in the travel history storage part and, based on the analysis, assigns a predetermined use scene of the vehicle to a usage state of the vehicle including a time factor including a time zone and a day of the week, a departure place, a destination and a travel route; and an information providing part that provides information to the user of the vehicle and changes the information to be provided according to whether the vehicle is present in the home area and the predetermined use scene assigned by the usage pattern analysis part.

Other objects, features and advantages of the present invention will become more apparent from the following detailed description when read in conjunction with the Accompanying drawings.

### BRIEF DESCRIPTION OF THE DRAWINGS

FIG. 1 is a block diagram illustrating a configuration of an information providing system including an information providing apparatus according to a present embodiment;
FIGs. 2A and 2B illustrate states where recommended information is displayed on a display device; and
FIG. 3 is a flowchart illustrating one example of a process of extracting (estimating) the position of the home of a vehicle user by an information providing apparatus (a learning process part).

### DETAILED DESCRIPTION OF THE EMBODIMENT

The present embodiment relates to a vehicular information providing apparatus which provides information to a vehicle user (occupant) by using a display device or a sound output device.

According to Patent Reference No. 1, when the onboard apparatus is present in the user's home area, information to be provided is not changed. Therefore, a problem may occur depending on the vehicle use scene.

For example, according to Patent Reference No. 1, when the onboard apparatus is present in the user's home area, bargain-sale information or so is provided. However, in a scene where the user is using the vehicle for traveling to his or her workplace, bargain-sale information may be useless for the user in the scene. In some case, the user may be rather annoyed if useless information is delivered and automatically provided to the user.

The present embodiment is devised in consideration of the problem, and an object of the present embodiment is to provide a vehicular information providing apparatus that is capable of changing information to be provided depending on a vehicle use scene.

Below, with reference to the drawings, the embodiment of the present invention will be described.

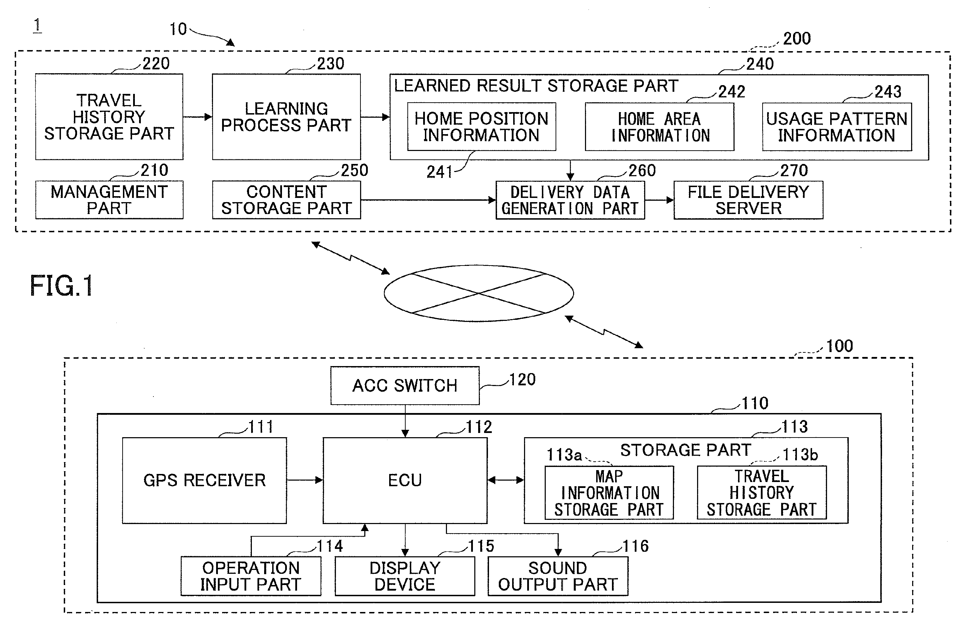

FIG. 1 is a block diagram illustrating a configuration of an information delivery system 1 including an information providing apparatus 10 according to the present embodiment.

The information providing apparatus 10 according to the present embodiment is implemented in the information delivery system 1 using both a vehicle 100 and an information center 200 described later, analyses usage patterns of the vehicle 100 based on a travel history of the vehicle 100, and, based on the analysis result, changes information to be provided to the user of the vehicle 100.

The information delivery system 1 includes a plurality of the vehicles 100, the information center 200, and so forth. In the information delivery system 1, the information center 200 delivers information to the respective vehicles 100, and thus, provides the information to the users of the vehicles via onboard apparatuses 110, respectively. In particular, in the information delivery system 1 according to the present embodiment, the information center 200 automatically delivers to the vehicles 100 pieces of recommended information which are expected to be useful for the users of the respective vehicles 100. Below, for the sake of simplification of description, the description will be made focusing on a relationship between the single vehicle 100 and the information center 200.

Note that "recommended information" can include advertising information, good-deal information (limited merchandise/service information, bargain-sale information, free-or-discount information, various-kinds-of-campaigns information, and/or the like), sightseeing information (tourist-spot information (for example, tourist spots, scenic spots, and/or the like in an area where the vehicle is traveling, and/or the like), hotel/inn information, and/or the like), leisure information (leisure-facility information, amusement-facility information, and/or the like), news, and/or the like.

The vehicle 100 includes the onboard apparatus 110 that actually carries out information delivery to the user based on the information delivered by the information center 200 and an accessory (ACC) switch 120.

The ACC switch 120 is a switch for powering certain vehicle accessories in the vehicle 100 such as the radio without turning on the engine of the vehicle 100.

The onboard apparatus 110 is configured to be capable of carrying out communication bidirectionally with the information center 200 via a wireless network such as, for example, a mobile telephone network or so, and includes a Global Positioning System (GPS) receiver 111, an ECU 112, a storage part 113, an operation input part 114, a display device 115 and a sound output part 116.

The GPS receiver 111 is a position-detecting device that detects the position of the vehicle 100. The GPS receiver 111 calculates the position (the longitude and the latitude) of the vehicle 100 based on GPS signals received from several (for example, four) GPS satellites in the sky, and transmits the position of the vehicle to the ECU 112.

The ECU 112 is a main control device in the onboard apparatus 1101. It is possible that the ECU 112 includes, for example, a microcomputer or so, and executes various control processes as a result of, for example, a CPU executing a program(s) stored in a ROM. For example, the ECU 112 carries out a process of displaying a map (screen page) near the current position of the vehicle 100 calculated by the GPS receiver 111 on the display device 115 based on map information stored in a map information storage part 113a, described later. Also, the ECU 112 carries out a process of displaying the recommended information delivered by the information center 200 on the display device 115 (i.e., a process of providing the recommended information to the user of the vehicle 100 by displaying it on the display device 115). In addition, it is also possible that the ECU 112 carries out a process of providing the recommended information delivered by the information center 200 in a form of a sound output from the sound output part 116.

Note that a specific method of displaying the recommended information on the display device 115 can be, for example, a method using only letters/characters, a method using images such as photographs or so (that can include a moving picture) or a method including both.

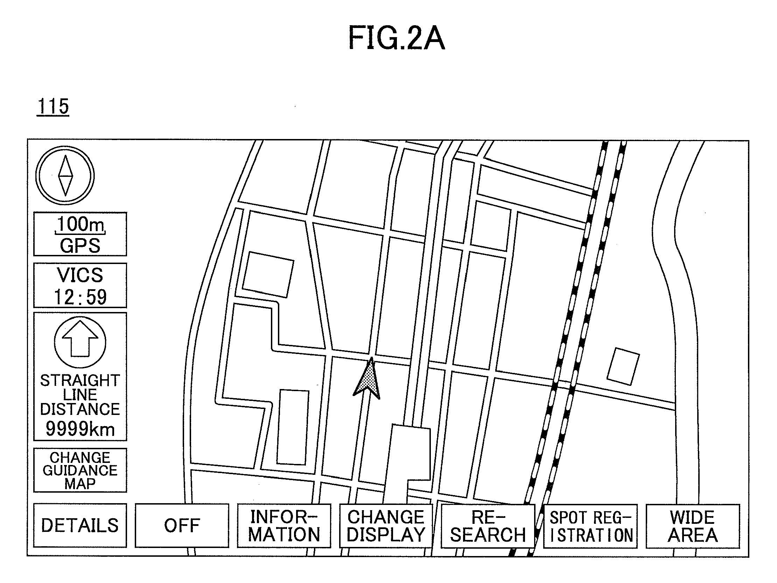

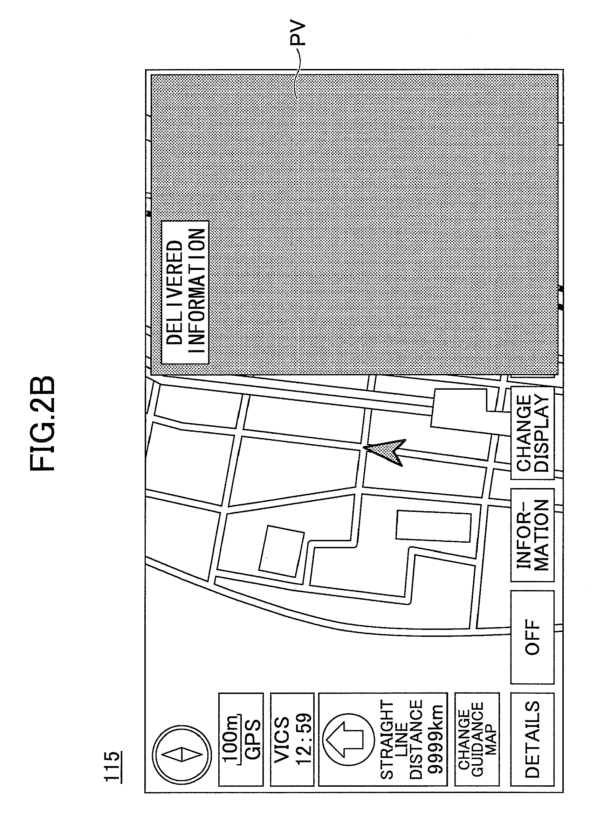

FIGs. 2A and 2B illustrate states where the recommended information is displayed on the display device 115. FIG. 2A illustrates one example of a screen page during the vehicle 100 travelling. FIG. 2B illustrates one example of a screen page during a stoppage of the vehicle 100.

Note that in each of the respective cases of FIGs. 2A and 2B, the onboard apparatus 110 has already received the recommended information delivered by the information center 200.

As shown in FIG. 2A, when the vehicle 100 is travelling, the display device 115 shows a figure shaped like an arrow indicating the current position of the vehicle 100 on a map screen page of an area where the vehicle 100 is currently traveling but does not show the recommended information.

On the other hand, as shown in FIG. 2B, when the vehicle 100 is in a stopped state due to a traffic light or so, the display device 115 shows the recommended information PV at a right side area of the screen in a manner of overlaying the map.

Thus, the recommended information is displayed on the display device 115 during a stoppage of the vehicle 100 to avoid interfering with driving the vehicle 100 by the user.

Note that, as shown in FIG. 2A, during the vehicle 100 travelling, the recommended information is not shown on the display device 115. However, it is possible that the sound output part 116 is used to provide the recommended information in a form of a sound output even during the vehicle 100 travelling.

Further, it is possible that the ECU 112 stops displaying the recommended information on the display device 115 after an elapse of a predetermined period of time after the vehicle 100'receives the recommended information from the information center 200. Also, it is possible that the ECU 112 changes a timing to stop displaying the recommended information on the display device 115 depending on the kind, the newness, or so, of the recommended information. For example, when the recommended information is information concerning a facility in an area where the vehicle 100 is currently traveling, it is possible that the ECU 112 stops displaying the recommended information when the distance from the facility becomes greater than or equal to a predetermined distance.

The ECU 112 carries out a process of storing travel history information (i.e., information concerning the travel state of the vehicle 100 in each "trip") of the vehicle 100 in a travel history storage part 113b. For example, the ECU 112 stores, every predetermined period of time, the position information (travel position information) of the vehicle 100 received from the GPS receiver 111 in a manner of associating it with the corresponding time in the travel history storage part 113b. Also, the ECU 112 stores the position of the vehicle 100, as the position where the vehicle 100 is parked, at an ACC-ON time and an ACC-OFF time (an ACC-ON position and an ACC-OFF position) in a manner of associating it with the corresponding time in the travel history storage part 113b.

Note that a "trip" means a travel duration starting from a departure of the vehicle 100 from a parked position and ending when the vehicle is parked at a subsequent parked position. According to the present embodiment, a "trip" means a travel duration starting when the ACC switch 120 is turned on ("ACC-ON") and ending when the ACC switch 120 is turned off ("ACC-OFF").

The ECU 112 carries out a process of transmitting the travel history information (the travel position information, the ACC-ON position information, the ACC-OFF position information, and/or the like, of the vehicle 100) stored in the travel history storage part 113b to the information center 200 at a predetermined timing. For example, it is possible that the ECU 112 transmits the travel history information of the vehicle 100 stored in the travel history storage part 113b when ACC-ON is made in the vehicle 100.

Note that, in order to allow the information center 200 to determine which of the vehicles 100 has transmitted the travel history information, the ECU 112 transmits the travel history information after including, for example, an ID unique to the onboard apparatus 110 in the travel history information. Also, for example, vehicle speed information or so, other information concerning the traveling state of the vehicle 100 or so, and/or the like, for example, can be included in the travel history information, in addition to the travel position information, the ACC-ON position information and the ACC-OFF position information. Further, the ACC-ON position information and the ACC-OFF position information are examples of information indicating a position where the vehicle 100 is parked, and thus, other information (for example, output information of an occupant sensor which detects whether the driver is sitting on his or her seat) can be used instead.

The storage part 113 is a nonvolatile storage device and includes the map information storage part 113a, the travel history storage part 113b, and so forth.

The map information storage part 113a stores map information and so forth.

Note that "map information" can include link position information, link road type (i.e., an expressway, a general way, a narrow street, or so) information, node (a connection point between links) position information, node type information, information concerning connection relations between a node and a link, and/or the like. A "link" means a section acquired from finely dividing a road on a map according to a predetermined rule. For example, a section between each adjacent traffic light, a section between each adjacent junctions (crossings), or so, can be a "link". Also, each link can be managed by giving it a corresponding number.

The travel history storage part 113b stores the travel history information of the vehicle 100 (i.e., information concerning the traveling state of the vehicle 100 at each trip).

Note that the travel history information stored in the travel history storage part 113b can be deleted at each time after the completion of transmission of the travel history information to the information center 200 by the ECU 112.

Note that either the map information storage part 113a or the travel history storage part 113b can be included in a storage device other than the storage part 113.

The operation input part 114 is an operation device for the user of the vehicle 100 to operate the onboard apparatus 110. For example, the operation input part 114 can be a mechanical button, a joystick, a touch pad (including a touch panel), or so. The user of the vehicle 100 is allowed to read Point Of Interest (POI) information concerning a facility included in the recommended information displayed on the display device 115, select the facility itself as a destination to cause the onboard apparatus 110 to execute a route guidance therefor, or so, by making an operation input from the operation input part 114.

The display device 115 is a display device for displaying a predetermined image based on an instruction from the ECU 112. Also, the display device 115 is an output device for outputting the contents of an operation that is input from the operation input part 114, or a result of a control process carried out by the ECU 112 in a form of a predetermined image.

Note that it is possible that an image (a screen page) displayed on the display device 115 is generated by a processing unit inside the display device 115 based on an instruction from the ECU 112, or it is possible that an image (a screen page) displayed on the display device 115 is generated in the ECU 112 and is transmitted to the display device 115.

The sound output part 116 is an output device for outputting a sound based on an instruction from the ECU 112. For example, the sound output part 116 can be a speaker installed in the cabin of the vehicle 100, or so.

The information center 200 has functions of setting a home area of the user of the vehicle 100 and generating usage pattern information of the vehicle 100 based on the travel history information periodically transmitted from the vehicle 100, and also, determining

(changing) the contents of the recommended information to deliver to the vehicle 100 based on the home area and the usage pattern information. The information center 200 includes a management part 210, a travel history storage part 220, a learning process part 230, a learned result storage part 240, a content storage part 250, a delivery data generation part 260 and a file delivery server 270.

The management part 210 manages (or integrates and controls) various processes in the information center 200. For example, the management part 210 can be a computer that includes a CPU, a ROM, a ROM, an I/O and so forth.

In particular, the management part 210 determines or changes the recommended information to deliver to the vehicle 100 based on home position information 241, home area information 242 and usage pattern information 243, described later, in the learned result storage part 240, and delivers the thus determined recommended information. The details will be described later.

Note that it is possible that various control processes in the management part 210 are carried out as a result of the CPU executing various programs stored in the ROM.

The travel history storage part 220 is a storage device that stores the travel history information (the travel position information, the ACC-ON position information, the ACC-OFF position information, and/or the like, of the vehicle 100) transmitted from the vehicle 100 to the information center 200 at a predetermined timing.

The learning process part 230 generates learned data concerning the usage state of the vehicle 100 based on the travel history information of the vehicle 100 stored in the travel history storage part 220.

Note that it is possible that the learning process part 230 generates the learned data at a predetermined cycle (for example, every day at 2 o'clock AM). It is also possible that the learning process part 230 generates the learned data at a predetermined timing after the travel history information of the vehicle 100 is newly stored in the travel history storage part 220.

The learning process part 230 generates, as examples of the learned data, the home position information of the user of the vehicle 100, the home area information of the user of the vehicle 100, the use scene information of the vehicle 100, and/or the like.

The process for generating the learned data carried out by the learning process part 230 can be divided into, for example, the following four processes (steps), i.e., (1) a trip data generation process, (2) a normalization process, (3) a destination (departure place) extraction process and (4) a learned data generation process, each of which will be described below.

### (1) Trip Data Generation Process

The learning process part 230 modifies the travel history information stored in the travel history storage part 220 and generates data associated with each trip (trip data). For example, the learning process part 230 generates the trip data by associating the corresponding travel position information, ACC-ON position information and ACC-OFF position information with each trip. Also, the learning process part 230 converts the travel position information of the trip data to link information corresponding to the travel route (for example, a sequence of link numbers, or so).

### (2) Normalization Process

The learning process part 230 normalizes the trip data according to a predetermined rule. For example, the learning process part 230 excludes sets of trip data lacking the ACC-ON position information or the ACC-OFF position information for some reason and sets of trip data corresponding to parking processes for certain parking spaces in short periods of time from sets of trip data to be used to generate the learned data. Also, the learning process part 230 connects two (first and second) sets of trip data corresponding to the respective sets of the ACC-OFF position information and the ACC-ON position information concerning respective processes of stopping in short periods of time (for example, respective processes of shopping in convenience stores on the way to a destination) to integrate them into one set of trip data.

### (3) Destination (Departure Place) Extraction Process

The learning process part 230 extracts the destinations of the vehicle 100 (i.e., the destinations to which the vehicle 100 travelled in the past) from the ACC-OFF positions (or the ACC-ON positions) of the respective sets of normalized trip data, i.e., the parked positions of the vehicle 100.

Note that the thus extracted destinations are, to put it the other way around, also the departure places because they can be said to be the departure places for the subsequent trips. Below, for the sake of convenience, the description of the corresponding processes will be made as being processes for extracting the destinations.

For example, it is possible to extract a predetermined area including the ACC-OFF position as the destination (area). When a plurality of the adjacent ACC-OFF positions are present, there is a likelihood that they belong to the same destination. Therefore, it is possible to set the destination (area) acquired from collecting a plurality of the ACC-OFF positions according to a predetermined rule.

### (4) Learned Data Generation Process

The learning process part 230 generates the learned data (the home position information, the home area information and the usage pattern information) based on the thus generated sets of trip data (including the thus normalized sets of trip data), the thus extracted destinations (departure places), and/or the like, as follows.

### (4-1) Home Position Information Generation Process (Home Position Extraction Process)

The learning process part 230 extracts (estimates) the destination corresponding to the home of the user of the vehicle 100 from among the extracted destinations (departure places) based on the sets of trip data and generates the home position information.

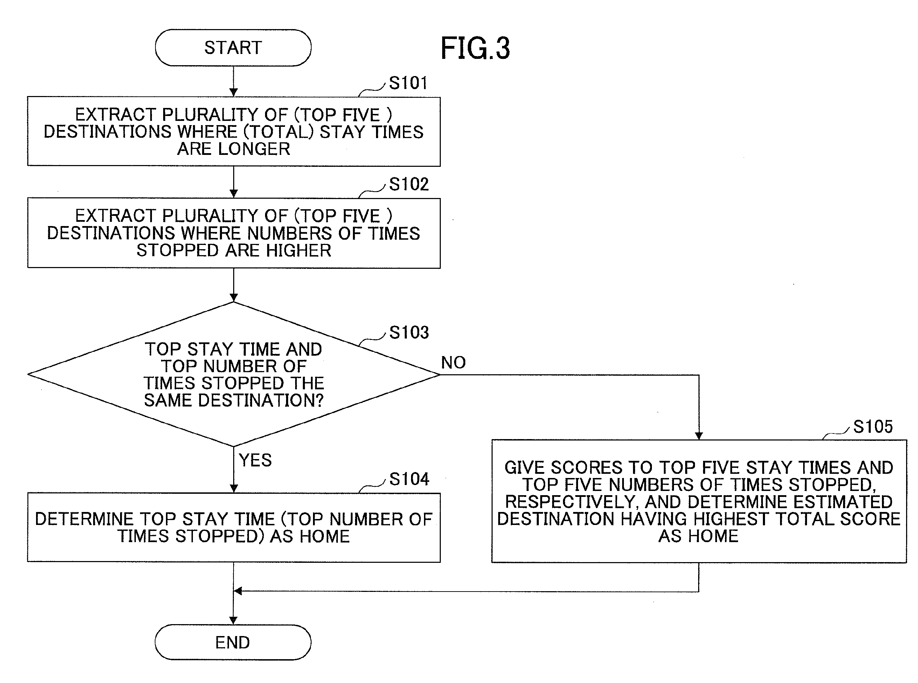

FIG. 3 is a flowchart illustrating one example of a home position extraction process by the learning process part 230.

As shown in FIG. 3, in Step S101, the learning process part 230 extracts the top plurality of (in this example, the top five) destinations having the longest stay times in total for the user of the vehicle 100, i.e., the longest parked times in total of the vehicle 100 from among the extracted destinations of the vehicle 100.

In Step S102, the learning process part 230 extracts the top plurality of (in this example, the top five) destinations having the highest numbers of times stopped, i.e., the highest numbers of arrival times of the user of the vehicle 100 from among the extracted destinations of the vehicle 100.

In Step S103, the learning process part 230 determines whether the destination having the top stay time of the user of the vehicle 100 (i.e., the destination having the longest stay time) is the same as the destination having the top number of times stopped (i.e., the destination having the highest number of times stopped). When they are the same (YES in step S103), the learning process part 230 proceeds to Step S104. When they are not the same (NO in step S103), the learning process part 230 proceeds to Step S105.

In Step S104, the learning process part 230 extracts the destination having the longest stay time (i.e., the destination having the highest number of times stopped) as the home position, and finishes the current process.

On the other hand, in Step S105, the learning process part 230 gives scores to the highest-ranking (in the example, the top five) destinations concerning the stay times and the highest-ranking (in the example, the top five) destinations concerning the number of times stopped, respectively, and extracts the home by a score evaluation. Specifically, the learning process part 230 extracts the destination having the highest total score as the home position and finishes the current process.

For example, it is possible that the learning process part 230 gives scores such as 10 points, 6 points, 4 points, 2 points and 1 point to the ranking top, second, third and fourth, respectively, of each of the two categories, i.e., the stay time and the number of times stopped, and extracts the destination having the top total score as the home position. It is also possible that the scores given to the highest-ranking destinations of the category of the stay time are different from the scores given to the highest-ranking destinations of the category of the number of times stopped. For example, the likelihood of invariably stopping at home every day is high. However, there is a likelihood that the stay time at home is short, depending on the style of work or so. Therefore, it is possible to give higher scores to the highest-ranking destinations of the category of the number of times stopped than the highest-ranking destinations of the category of the stay time.

Thus, the learning process part 230 can extract (estimates) the home position from the extracted destinations and generate the home position information. The learning process part 230 stores the generated home position information in the learned result storage part 240.

### (4-2) Home Area Information Generation Process (Home Area Extraction Process)

The learning process part 230 extracts the home area of the user of the vehicle 100 based on the generated home position information, the generated sets of trip data (including the normalized sets of trip data), the extracted destinations (departure places) and/or the like, and generates the home area information. More specifically, the learning process part 230 extracts the home area of the user of the vehicle 100 based on the home position of the user of the vehicle 100, the destination(s) to which the vehicle 100 travelled a predetermined number of times (for example, twice) or more within a predetermined period of time (for example, the past month) (hereinafter, referred to as "high-frequency destination(s)"), and the travel route(s) (the sequence(s) of links) passed for arriving at the high-frequency destination(s).

For example, it is possible that the learning process part 230 sets the home area by considering the travel route(s) with respect to a circular area having the home radius which is the distance from the user's home to the farthest high-frequency destination. That is, for example, when the travel route (a diversion or so) is present outside the circular area due to factors such as, for example, the geography, a traffic jam which occurs at a high frequency, and/or the like, the corresponding part can be included in the home area in addition to the circular area. It is also possible that the learning process part 230 sets, as the home area, an area that is acquired from excluding an area(s) not having the travel route, and/or the like, according to a predetermined rule, from the circular area having the home radius which is the distance from the home to the farthest high-frequency destination.

Thus, the learning process part 230 can extract the home area according to the specific situation of the user of the vehicle 100 more precisely by using the factor of the travel route(s) in addition to the destination(s) to which the vehicle 100 traveled in the past (high-frequency destination(s)).

Note that it is possible that the home position information used to extract the home area is based on the home position that is set by an operation input made by the user of the vehicle 100 from the operation input part 114.

The learning process part 230 generates the information concerning the extracted home area (the home area information), and stores it in the learned result storage part 240.

### (4-3) Usage Pattern Information Generation Process (Usage Pattern Analysis Process)

The learning process part 230 analyses the usage patterns of the vehicle 100 based on the generated home position information, the generated sets of trip data (including the normalized sets of trip data), the extracted destinations (departure places), and/or the like. Then, the learning process part 230 generates the usage pattern information based on the analysis result of the usage patterns.

Specifically, the leaning process part 230 analyses the usage patterns of the vehicle 100 such as, for example, evaluating periodicity of the usage of the vehicle 100, based on the times of arrival at the parked positions (the extracted destinations) of the vehicle 100 (corresponding to the times of visiting the destinations), the parked periods of time at the parked positions (corresponding to the stay times of the user), the travel routes (sequences of links) toward the parked positions, and/or the like.

For example, when the vehicle 100 travels from the extracted home position to the same destination in the same time zone (for example, between 7 o'clock AM and 8 o'clock AM) every weekday (or every day of the week other than a predetermined day(s) of the week), it is estimated that the destination is the workplace and the vehicle 100 is used for commuting in the time zone. It is also possible that, when estimating whether the destination is the workplace, such information concerning the travel route that every time the same travel route is used to travel thereto is taken into consideration. Further, when the estimated workplace is the departure place, it can be seen that thereafter the vehicle 100 is used for a private purpose. Further, when the vehicle 100 travels from the extracted home position to the same destination in the same time zone (for example, between 10 o'clock AM and 11 o'clock AM) each time on a day of the week (for example, Saturday) other than days of the week where the vehicle 100 is used for commuting, it is estimated that the destination is a place where a recurring activity is made during a private time of the user such as a class. When the destination is where the user stops randomly, basically it can be estimated that the vehicle 100 is used for a private purpose.

Thus, by analyzing the usage patterns of the vehicle 100, it is possible to estimate a use scene of the vehicle 100 according to a usage state of the vehicle 100 including a time factor including a day of the week and a time zone, a departure place, a destination and a travel route. According to the present embodiment, usages of the vehicle 100 are classified as three use scenes, i.e., a "private usage (basically, a use scene of the vehicle 100 of the user in a private time of the user)", a "public usage (a use scene of the vehicle 100 in hours basically on duty such as commuting, student commuting, business, or so)" and an "outside-home-area usage (a trip/journey, a "back to the home town" trip, or so)". In the usage pattern analyzing process, the learning process part 230 generates the usage pattern information including profile information created by assigning private usage" or "public usage" to each of the usage state factors of the vehicle 100, i.e., the time factors including days of the week and time zones, departure places, destinations and travel routes, or combinations of these respective factors.

For example, the learning process part 230 assigns "public usage" to the time factor of the time zone between 7 o'clock and 8 o'clock AM of every weekday corresponding to a commuting time zone, the travel route passed every instance of commuting, and/or the like. The leaning process part 230 also assigns "public usage" to the combination of the departure place that is the extracted home position and the destination that is (the position estimated as) the workplace. The learning process part 230 assigns "private usage" to the destination where the vehicle travels to at high frequency on holidays.

Note that it is possible that each of both use scenes of "private usage" and "public usage" is further classified more finely. For example, "private usage" can be classified into an after-work usage, a holiday usage, and so forth. "Public usage" can be classified into a commuting usage, a student commuting usage, a business usage, and so forth.

The learning process part 230 stores the generated usage pattern information in the learned result storage part 240.

The learned result storage part 240 stores the learned data (the home position information 241, the home area information 242 and the usage pattern information 243) generated by the learning process part 230.

The content storage part 250 is a storage device that stores content such as POI information, advertising information, good-deal information (limited merchandise or service information, bargain-sale information, free-or-discount information, various-kinds-of-campaigns information, and/or the like), sightseeing information (tourist-spot information (for example, tourist spots, scenic spots, and/or the like in an area where the vehicle is traveling, and/or the like), hotel/inn information, and/or the like), leisure information (leisure-facility information, amusement-facility information, and/or the like), news, and/or the like. The content storage part 250 acquires the latest content from an external content provider or so via the Internet periodically, and updates the various sorts of information, under the control of the management part 210.

The delivery data generation part 260 generates data to be delivered to the respective vehicles 100 from the information center 200 under the control of the management part 210. For example, it is possible that the delivery data generation part 260 generates the recommended information to be delivered from the file delivery server 270 based on the various sorts of information stored in the content storage part 250.

The file delivery server 270 delivers information to the vehicle 100 under the control of the management part 210. For example, the file delivery server 270 delivers the recommended information to the vehicle 100.

Next, determination (change) of the recommended information by the information providing apparatus 10 (the management part 210) will be described.

The management part 210 determines (changes) the recommended information to be provided based on the home area information 242 and the usage pattern information 243 stored in the learned result storage part 240.

First, the management part 210 determines based on the home area information 242 whether the vehicle 100 (the onboard apparatus 110) is present in the user's home area.

When the management part 210 determines, according to the current position of the vehicle 100, that the vehicle 100 is present outside the user's home area, the management part 210 assigns "outside-home-area usage" as the use scene of the vehicle 100.

On the other hand, when the management part 210 determines, depending on the current position of the vehicle 100, that the vehicle 100 is present in the user's home area, the management part 210 determines the use scene of the vehicle 100 to be either "public usage" or "private usage".

Note that it is possible that the management part 210 transmits a request signal to the vehicle 100 (the onboard apparatus 110) and acquires the current position of the vehicle 100 by receiving current position information of the vehicle 100 transmitted from the onboard apparatus 110 (ECU 112) in response to the request signal.

Also, when the management part 210 determines that the user's vehicle 100 is present in the home area of the user, the management part 210 assigns either "public usage" or "private usage" as the use scene of the vehicle 100, further according to the usage state of the vehicle 100 (the time factor including the day of the week and the time zone, the departure place, the destination, the travel route, and so forth).

As described above, the usage pattern information 243 in the learned result storage part 240 includes the profile information created from assigning "private usage" or "public usage" to each of the factors of the usage state of the vehicle 100 including the time factors including the days of the week and the time zones, the departure places, the destinations and the travel routes, or combinations of the respective factors. Therefore, the management part 210 assigns "private usage" or "public usage" as the use scene of the vehicle 100 based on the current travel state of the vehicle 100 and the usage pattern information 243.

For example, when the vehicle 100 travels to the destination (estimated) of the workplace from the extracted home position in the time zone between 7 o'clock and 8 o'clock AM, it is possible to assign "public usage (used for commuting)". When the vehicle 100 has the departure place that is the extracted home position in the time zone of the afternoon of a holiday, it is possible to assign "private usage".

Note that it is possible that the management part 210 transmits a request signal to the vehicle 100 (the onboard apparatus 110) and acquires the current travel state of the vehicle 100 by receiving the travel state of the vehicle 100 transmitted from the onboard apparatus 110 (the ECU 112) in response to the request signal. Also, it is possible that the destination included in the received travel state of the vehicle 100 is the destination determined as a result of the user making an operation input from the operation input part 114. Further, it is possible that the destination included in the received travel state of the vehicle 100 is the destination estimated by the onboard apparatus 110 (the ECU 112) based on the departure place, the current travel route, and/or the like.

Next, the management part 210 determines (changes) the recommended information to deliver, according to the assigned use scene.

For example, when the assigned use scene is "public usage (used for commuting)", advertising information is not to be included in the recommended information to deliver. That is, advertising information is considered unnecessary for the user in a commuting time. Thus, it is possible to avoid annoying and/or discomforting the user by preventing advertising information from being provided from the display device 115 or the sound output part 116.

Also, when the assigned use scene is "private usage", the priority of good-deal information in the recommended information to deliver is increased. That is, good-deal information is delivered preferentially. This is because good-deal information is some of the most useful information for a user while present in his/her home area on his/her free time.

Further, when the assigned use scene is "outside-home-area usage", the priority of sightseeing information and/or leisure information in the recommended information to deliver is increased. That is, sightseeing information and/or leisure information is delivered preferentially. This is because sightseeing information and/or leisure information is some of the most useful information for a user outside of his/her home area who is likely to use the vehicle 100 for the purpose of having an experience different from his/her daily life.

Thus, the information providing apparatus 10 according to the present embodiment can provide information in accordance with the use scene of the vehicle 100 by using the home area information 242, the usage pattern information 243, and/or the like.

Thus, the vehicular information providing apparatus has been described in the embodiment. However, the present invention is not limited to such a specific embodiment. Various modifications can be made without departing from the claimed invention.

For example, the information providing apparatus 10 is implemented using both the vehicle 100 (the onboard apparatus 110) and the information center 200 of the information delivery system 1. However, the information providing apparatus 10 can be implemented using only the vehicle 100 (the onboard apparatus 110). That is, when such a configuration is adopted that the learned data is generated within the vehicle 100 based on the travel history of the vehicle 100 (in other words, information being delivered from the information center 200 is not assumed), the information providing apparatus 10 is implemented in the vehicle 100 (the onboard apparatus 110).

Thus, according to the present embodiment, it is possible to provide a vehicular information providing apparatus that is capable of changing information to be provided depending a vehicle use scene.

The present application is based on and claims the benefit of priority of Japanese Priority Application No. 2014-156945, filed on July 31, 2014, the entire contents of which are hereby incorporated herein by reference.

A vehicular information providing apparatus stores a travel history of a vehicle; sets a home area of a user of the vehicle; analyses usage patterns of the vehicle based on the travel history and, based on the analysis, assigns a predetermined use scene of the vehicle to a usage state of the vehicle including a time factor including a time zone and a day of the week, a departure place, a destination and a travel route; and provides information to the user of the vehicle and changes the information to be provided according to whether the vehicle is present in the home area and the predetermined use scene assigned.

## Claims

1. A vehicular information providing apparatus comprising:
a travel history storage part that stores a travel history of a vehicle;
a home area setting part that sets a home area of a user of the vehicle;
a usage pattern analysis part that analyses usage patterns of the vehicle based on the travel history stored in the travel history storage part and, based on the analysis, assigns a predetermined use scene of the vehicle to a usage state of the vehicle including a time factor including a time zone and a day of the week, a departure place, a destination and a travel route; and
an information providing part that provides information to the user of the vehicle and changes the information to be provided according to whether the vehicle is present in the home area and the predetermined use scene assigned by the usage pattern analysis part.

2. The vehicular information providing apparatus as claimed in claim 1, further comprising:
a destination extraction part that extracts a destination where the vehicle traveled to in the past based on the travel history stored in the travel history storage part, wherein
the home area setting part sets the home area based on a home position of the user of the vehicle, the destination extracted by the destination extraction part and the travel route through which the vehicle traveled to the destination.

3. The vehicular information providing apparatus as claimed in claim 2, further comprising:
a home position extraction part that extracts the home position based on the travel history stored in the travel history storage part, the home position extraction part extracting the home position from among the destinations extracted by the destination extraction part based on a parking time of the vehicle at each of the destinations extracted by the destination extraction part and the number of times of arrival at each of the destinations extracted by the destination extraction part.

4. The vehicular information providing apparatus as claimed in any one of claims 1-3, wherein
the information providing part does not include advertising information in the information to be provided, when the vehicle is present in the home area and the usage pattern analysis part assigns the use scene corresponding to the user's use of the vehicle on the way to a workplace or a school as the predetermined use scene.

5. The vehicular information providing apparatus as claimed in any one of claims 1-4, wherein
the information providing part raises the priority of good-deal information in the information to be provided, when the vehicle is present in the home area and the usage pattern analysis part assigns a use scene corresponding to the user's use of the vehicle in the user's free time as the predetermined use scene.

6. The vehicular information providing apparatus as claimed in any one of claims 1-5, wherein
the information providing part raises the priority of sightseeing information in the information to be provided when the vehicle is present outside the home area.
